# EUROPEAN PATENT SPECIFICATION

(11) **EP 1 840 406 B1**
(45) Date of publication and mention of the grant of the patent: **23.06.2010**
(21) Application number: 07105489.4
(22) Date of filing: 02.04.2007
(51) Int. Cl.: F16D 69/02

(54) **Clutch facing**
Kupplungsbelag
Garniture d'embrayage

(30) Priority: 31.03.2006 JP 2006097188; 05.03.2007 JP 2007054119
(43) Date of publication of application: 03.10.2007
(73) Proprietor: AISIN KAKO KABUSHIKI KAISHA, Toyota-shi Aichi-ken 470-0492 (JP)
(72) Inventor: Katsukawa, Masahiro, Komaki-shi Aichi 485-0068 (JP)
(74) Representative: TBK-Patent

(56) References cited:
- EP-A- 1 081 406
- EP-A1- 0 000 840
- EP-A1- 0 538 772
- EP-A1- 1 319 860
- GB-A- 2 114 586
- US-A- 6 056 100

## Description

This invention relates to a dry clutch facing, for example, a clutch facing of a clutch used in a vehicle like an automotive. This invention particularly relates to a clutch facing that releases a lower amount of a sulfur compound generated by a frictional heat.

In a clutch used in a vehicle like an automobile, a clutch facing reaches very high temperature when it is used in a high-load zone, e.g. when it is operated in a half-clutch or half-engaged condition. Then, sulfur blended in the clutch facing for vulcanizing a rubber becomes a gaseous sulfur compound such as a hydrogen sulfide, a methylmercaptan or the like. In this case, a problem takes place that these sulfur compound gases enter into a cabin of the vehicle and generate unpleasant smell. However, it is difficult to eliminate the use of the sulfur, since the sulfur is best suited as the cross-linking material for the rubber in view of costs and abrasion resistance.

Friction materials which could be used as materials for clutch facings are known in the art. As such, the EP-A-1 081 406 discloses a non-asbestos friction material comprising a molded and cured composition which includes a fibrous base, a binder, a filler, and particles of a rubber composite composed primarily of at least one fibrous substance and a rubber, or of at least one fibrous substance, at least one type of hard particle and rubber. Further, the GB-A-2 114 586 discloses a friction lining suitable for brakes and clutches comprising mineral fibers which contain alumina, silica and lime. Further, the US-A-6 056 100 discloses a friction liner for a dry friction device such as a clutch friction wheel or a disc brake for a motor vehicle gear box, being of a flat, annular general form. Further, the EP-A-0 000 840 relates to a friction material and their use, whereby the friction material does not contain asbestos. The composition contains a thermosetting binder, which may be based on a phenolformaldehyde resin, or a heat and chemical resistant rubber, the binder making up 15 to 40 percent by volume of the material.

There is an empirical rule that, once a dry clutch facing has released the sulfur compound gas, it never generates the odor thereafter even if the same heat load is applied thereto. In view or such empirical rule, it is probable to take a countermeasure that a heat is applied to a surface of the dry clutch facing in advance by a hot plate. Still, since an entire surface of the clutch facing is to be heated by this method, the entire dry clutch facing becomes high temperature. Thereby, there takes place warpage thereon even if it is slowly cooled at the time of cooling-down.

Then, the inventors made an invention relating to a dry clutch facing and its manufacturing method in order to solve the above problem, as described in a Japanese Laid Open Patent Publication 2003-184921. In the dry clutch facing and the manufacturing method described in the patent publication, a laser beam is radiated on sulfur existing in a surface layer part of the dry clutch facing so as to burn and remove the sulfur in the surface layer part.

Thereby, no sulfur compound gas is generated even if the surface layer part of the dry clutch facing reaches very high temperature by half-clutch or successive slipping operations. Moreover, since the laser beam is able to heat only the surface layer part of the dry clutch facing to a very high temperature, an internal part of the dry clutch facing doe not become high temperature. Thus, there is no warpage generated on the dry clutch facing.

Still, the clutch facing and the manufacturing method described in the patent publication needs installation of a laser radiation equipment and addition of a laser radiation step, though they have a sufficient effect to lower the odor. Therefore, they raise costs by a facility investment or the like. Moreover, they remove merely the sulfur existing at the front surface of the clutch facing, there is no effect on a rear surface thereof. When the front surface of the clutch facing reaches a very high temperature, the rear surface becomes a high temperature, too. Consequently, there is a problem that the gaseous sulfur compound at the rear surface is still released.

In view of the above, it is an object of the present invention to provide a clutch facing that reduces an amount of a sulfur in a compounded rubber as a raw material of the clutch facing to a predetermined value or less, while maintaining a strength of the compounded rubber. Thereby, the clutch facing according to the present invention is manufacturable by a conventional method without need of any further steps and can lessen the release of a sulfur compound gas, while keeping the strength and friction characteristics as well.

The invention's underlying problem is solved by a clutch facing according to claim 1.

According to the invention, there is provided a clutch facing containing a compounded rubber, glass fiber and a synthetic resin for glass fiber impregnation. A volume content of a sulfur in the compounded rubber is kept within a range not more than a predetermined value. A thermosetting resin is blended in the compounded rubber so as to maintain a friction property and a strength of the clutch facing.

The compounded rubber is a material constituting the clutch facing. The compounded rubber is a mixture of a rubber as a main component and other compounding ingredients. That is, the compounded rubber is composed of a rubber such as a synthetic rubber or a natural rubber, a pigment such as a carbon black, sulfur as a vulcanizing agent, a vulcanization accelerator, a filler such as a resin dust or a calcium carbonate. The synthetic rubber may be an acrylonitrile-butadiene rubber, which is also called as an NBR or a nitrile rubber, and a styrene-butadiene rubber (SBR) or the like.

If the volume content of the sulfur in the compounded rubber is kept within a range not more than the predetermined value, at which an odor of a sulfur compound gas generated at a high temperature is barely noticeable or scarcely troublesome, it is possible to solve a problem of the odor of the sulfur compound gas. On the other hand, since the volume content of the sulfur is reduced, a crosslink density of the compounded rubber is lowered, thereby causing strength degradation and frictional property deterioration. Then, the invention add the thermosetting resin that is prepared in an optimum amount in the compounded rubber. Thus, the clutch facing is able to keep the same friction characteristics and strength as the conventional clutch facing.

Therefore, the clutch facing reduces the amount of the sulfur in the compounded rubber as the raw material of the clutch facing to the predetermined value or less, while maintaining the strength of the compounded rubber. Thereby, the clutch facing is manufacturable by the conventional method without need of any steps and can lessen generation of the odor of the sulfur compound gas, while keeping the strength and the friction characteristics as well.

In a preferable clutch facing, the volume content of the sulfur in the compounded rubber is set to such a rate that, if an odor of a sulfur compound gas is generated when the clutch facing becomes high temperature, the odor generation is restrained to a value less than an acceptable organoleptic value or odor intensity.

In a preferable clutch facing, an upper limit of the volume content of the sulfur in the compounded rubber is set at about 2.0 volume percent.

In a preferable clutch facing, the volume content of the sulfur in the compounded rubber is reduced by a fixed amount from a conventionally required volume content so as to be not more than the predetermined value. The thermosetting resin is blended in the compounded rubber in such an amount as to compensate for deterioration of the friction property and the strength of the clutch facing. The thermosetting resin is blended in the compounded rubber in an amount that corresponds to a reduced volume content of the sulfur so as to compensate for deterioration of the frictional property and the strength caused by reduction of the volume content of the sulfur.

In a preferable clutch facing, the volume content of the sulfur in the compounded rubber is 50% or less than the conventionally required volume content.

In a preferable clutch facing, the volume content of the sulfur in the compounded rubber is set within a range of 30 to 50% of the conventionally required volume content.

In such a preferable clutch facing, the thermosetting resin is blended in the compounded rubber in an amount twice to five times as large as a reduced amount of the sulfur in the compounded rubber.

In a preferable clutch facing, the volume content of the sulfur in the compounded rubber is set within a range of 0.5 to 2.5 volume percent to an entire volume of the clutch facing.

In a preferable clutch facing, the volume content of the sulfur in the compounded rubber is set within a range of 1.5 to 2.5 volume percent to an entire volume of the clutch facing.

In such a preferable clutch facing, the volume content of the sulfur in the compounded rubber is set ate of about 1.5 volume percent to the entire volume of the clutch facing and the volume content of the thermosetting resin in the compounded rubber is set within a range of 7 to 17 volume percent to the entire volume of the clutch facing.

In a preferable clutch facing, the thermosetting resin is one selected from a group consisting of a phenol resin, a modified phenol resin and an epoxy resin.

It turned out that, if the volume content of the sulfur is within the range of 0.5 volume percent to 2.0 volume percent or preferably within the range of 1.5 volume percent to 2.0 volume percent to an entire volume of the clutch facing, more desirable results are obtained in solving the problem of the odor generation from the sulfur compound gas as well as in the strength and the frictional property of the clutch facing. The inventor has completed the invention on the basis of such knowledge.

That is, if the volume content of the sulfur is less than 0.5 volume percent to the entire volume of the clutch facing, the clutch facing is free from the problem of the odor generation by the sulfur compound gas. However, such clutch facing fails to obtain similar effects in the strength and the frictional property or needs to use a large quantity of thermosetting resin for getting the same property, thereby raising the costs. On the other hand, if the volume content of the sulfur exceeds 2.0 volume percent to the entire volume of the clutch facing, the sulfur compound gas is generated to a predetermined amount or more. Consequently, such clutch facing still has the problem of occurance of odor.

In contrast, if the volume content of the sulfur is within a range of 0.5 volume percent to 2.0 volume percent to the entire volume of the clutch facing, the clutch facing solves the problem of odor generation due to the release of the sulfur compound gas, while obtaining the same property on the strength and the friction characteristics. The thermosetting resin is more expensive than the sulfur. Such clutch facing is advantageous in terms of costs, too.

Further objects and advantages of the invention will be apparent from the following description, wherein preferred embodiments of the invention are clearly shown.

A clutch facing according to one embodiment of the invention is described hereafter.

The embodiment of the clutch facing contains a compounded rubber, glass fibers and a synthetic resin for glass fiber impregnation. The clutch facing limits a volume content or volume percent of sulfur in the compounded rubber to within a range not more than a predetermined value. Moreover, the clutch facing adds a thermosetting resin in the compounded rubber. Thereby, the present embodiment of the clutch facing prevents generation of an odor due to a sulfur compound gas when it is heated, while maintaining a friction property and a strength equivalent to a conventional clutch facing.

Specifically, the clutch facing according to the present embodiment sets the volume content of the sulfur in the compounded rubber to such a rate that, if the odor of the sulfur compound gas is generated when the clutch facing becomes high temperature, it is restrained to a value less than an acceptable organoleptic value or odor intensity. For example, a concentration of each component of the gas of the sulfur compound such as hydrogen sulfide and methylmercaptan, which is generated from the high temperature clutch facing, becomes not more than a concentration corresponding to an odor intensity of " 2 " in the six point organoleptic scale by the organoleptic method. As well know, according to the six point organoleptic scale, the score "0" means "no odor detectable", "1" means "barely noticeable odor", "2" means "slight odor", "3" means moderate odor", "4" means "strong odor" and "5" means "extremely strong odor". For example, the concentration of the sulfur compound gas may be 0.02ppm or less in case of the hydrogen sulfide and 0.002ppm or less in case of the methylmercaptan. The clutch facing of the embodiment sets the volume content of the sulfur in the compounded rubber (volume content to an entire volume of the clutch facing) to 2.0 volume percent or less. Thus, the clutch facing controls the concentration of the each component of the generated sulfur compound gas is kept less than the aforementioned acceptable organoleptic value (odor intensity). That is, the present embodiment of the clutch facing sets an upper limit of the volume content of the sulfur in the compounded rubber to about 2.0 volume percent.

Seen from another point of view, the present embodiment of the clutch facing reduces the volume content of the sulfur in the compounded rubber by a predetermined rate compared to a volume content of the sulfur in a compounded rubber in a conventional clutch facing. In other words, the present embodiment of the clutch facing sets the volume content of the sulfur to a value less by a predetermined rate than a required volume content that is needed for vulcanizing or cross-linking the compounded rubber in the conventional clutch facing. For example, in the clutch facing of the embodiment, the volume content of the sulfur in the compounded rubber is preferably 50% or less than the conventionally required volume content. That is, in the embodiment, the clutch facing sets the volume content of the sulfur in the compounded rubber to an amount considerably smaller than the required amount needed for vulcanizing common compounded rubbers or to an insufficient amount for vulcanization or cross-linking of the rubbers. In this case, if the required amount of the sulfur used in vulcanizing the common rubbers is about 5 volume percent, for example, the upper limit of the volume content of the sulfur in the compounded rubber is set within a range lower than nearly 2.0 volume percent, which corresponds to nearly 50% or less than the above-mentioned required amount, in the present embodiment of the clutch facing.

On the other hand, in case the volume content of the sulfur in the compounded rubber is set to the amount considerably smaller than the required amount needed for vulcanizing the normal compounded rubber, frictional property and strength will be deteriorated. Accordingly, the present embodiment of the clutch facing blends the thermosetting resin in the compounded rubber so as to compensate for possible deterioration of the frictional property and the strength, while limiting the blending amount of the sulfur within the range less than the aforementioned predetermined value. Thus, the clutch facing is able to keep good the frictional property and the strength. In detail, the thermosetting resin is blended in the compounded rubber in an amount that corresponds to the reduced rate of the blending amount or the reduced amount of the sulfur as described above, that is an amount required for compensating for the degradation or weakening of the frictional property and the strength caused by the reduction of the blending amount of the sulfur.

Since the thermosetting resin is expensive compared to the sulfur, it is not preferable to increase a used amount of the thermosetting resin for the purpose of reducing a used amount of the sulfur to zero or nearly zero. Consequently, in the present embodiment of the clutch facing, a lower limit of the volume content of the sulfur in the compounded rubber is also set such that the sulfur cross-links the rubber molecules to a minimum range so as to give a minimum frictional property and strength to the rubber itself, while reducing the used amount of the thermosetting resin. Such lower limit of the sulfur is about 0.5 volume percent.

That is, the volume content of the sulfur in the compounded rubber is set in a range of 0.5 to 2.0 volume percent in the present embodiment of the clutch facing. In case the above-mentioned required amount of the sulfur in the common clutch facing is about 5 volume percent, for example, the volume percent of the sulfur in the present embodiment becomes within the range of about 10% to 50% of the above required amount. Moreover, it is preferable to set the volume content of the sulfur in the compounded rubber within a range of 1.5 to 2.0 volume percent. In case the above-mentioned required amount of the sulfur in the common clutch facing is about 5 volume percent, for example, the volume percent of the sulfur in this case becomes within the range of 30% to 50% of the above required amount.

On the other hand, if the blending quantity of the sulfur is reduced by 30% from the required amount or if the volume content of the sulfur is set to about 1.5 volume percent, it is preferable to blend the thermosetting resin in a corresponding amount or an amount nearly twice to five times as large as the reduced amount. Specifically, if the blending amount of the sulfur is reduced by 3.5 volume percent from 5 volume percent to 1.5 volume percent, it is preferable to blend the thermosetting resin in an amount corresponding to the reduced amount or an amount of about 7 volume percent to 17 volume percent.

Accordingly, the present embodiment of the clutch facing is able to restrain the generation of the sulfur compound gas to a large degree even if it reaches a high temperature, thereby solving the problem caused by the odor.

In the present embodiment, "compounded rubber" is a material constituting the clutch facing. The compounded rubber is a mixture of a rubber as a main component and other compounding ingredients. That is, the compounded rubber is composed of a rubber such as a synthetic rubber or a natural rubber, a pigment such as a carbon black, sulfur as a vulcanizing agent, a vulcanization accelerator, a filler such as a resin dust or a calcium carbonate. The synthetic rubber may be an acrylonitrile-butadiene rubber, which is also called as an NBR or a nitrile rubber, and a styrene-butadiene rubber (SBR) or the like.

In the present embodiment of the clutch facing, the thermosetting resin is preferably a phenol resin, a modified phenol resin, an epoxy resin or the like. It is conceivable that any kind of thermosetting resin has similar effects in the present embodiment of the clutch facing. Still, the phenol resin, the modified phenol resin and the epoxy resin are easily obtainable and excellent in heat resistance, so that they are preferable as the thermosetting resin as the material or ingredient of the clutch facing.

### WORKING EXAMPLES

Next, an experiment was carried out to study an upper limit of an amount of the sulfur (volume percent) in the clutch facing in order to limit the odor of the sulfur compound gas to a barely noticeable level or a barely troublesome level, if the odor is generated in case the clutch facing becomes high temperature. That is, it was examined which was the upper limit of the sulfur in order to satisfy the acceptable organoleptic value (odor intensity) of the odor of the gaseous sulfur compound.

Specifically, 10 grams of a specimen or sample was put into a container having a volume of 500cm3. Next, the specimen in the container was heated for 10 minutes at a temperature of 350 degrees centigrade in an oven. Then, a concentration of a hydrogen sulfide and a concentration of a methylmercaptan were measured, respectively, by use of a detector tube (a hydrogen sulfide detector tube and a methylmercaptan detector tube). It was determined as "Good" if the concentration was not more than a target value and as "Bad" if the concentration was more than the target value. The result of the experiment is shown in TABLE 1.

**TABLE 1**

| | Amount of sulfur in clutch facing (volume %) | | | | |
|---|---|---|---|---|---|
| | 1 | 2 | 3 | 4 | 5 |
| Hydrogen sulfide | Good | Good | Bad | Bad | Bad |
| Methylmercaptan | Good | Good | Bad | Bad | Bad |

As shown in TABLE 1, the result was "Good" in case the amount of the sulfur in the clutch facing is 2 volume percent or less in either of the hydrogen sulfide and the methylmercaptan. The result was "Bad" in case the amount of the sulfur in the clutch facing is 3 volume percent or more in either of the hydrogen sulfide and the methylmercaptan. Therefore, it was found that the problem of the odor generated by the sulfur compound gas could be solved by keeping the amount of the sulfur in the clutch facing to a level not more than 2 volume percent.

Next, according to the present embodiment, a first to a fifth working examples (1st to 5th WE) of clutch facings were manufactured, while varying composition into five kinds. Specifically, in the first to the fifth working examples, an amount of the sulfur was fixed at 1.5 volume percent in the clutch facing. Moreover, an amount of glass fibers is fixed at 23 volume percent, an amount of metal lines or fibers (copper line) was fixed at 1 volume percent, an amount of an aqueous phenol for glass fiber impregnation was fixed at 12 volume percent, and an amount of a compounded rubber was fixed at 64 volume percent as a whole, respectively. Then, amounts of other ingredients (rubber, carbon black, vulcanization accelerator, phenol resin powder, resin dust, calcium carbonate) than the compounded rubber were changed respectively.

An acrylonitrile-butadiene rubber (NBR) and a styrene-butadiene rubber (SBR) were used as the rubber in the compounded rubber, while mixing them at a weigh ratio of 6:4. A "Noxeler" that is a product name of OUCHISHINKO CHEMICAL INDUSTRIAL CO., LTD was used as the vulcanization accelerator.

On the other hand, for comparison purpose, a first and a second comparison examples (1st and 2nd CE) were manufactured, too. An amount of the sulfur in the compounded rubber was set at 5 volume percent in the first comparison example. An amount of the phenol resin powder in the compounded rubber was set at a less amount or 6 volume percent in the second comparison example.

Each composition of the first working example to the fifth working example and the first comparison example and the second comparison example are shown in an upper and middle part of TABLE 2.

**TABLE 2**

| Composition (volume %) | | 1st WE | 2nd WE | 3rd WE | 4th WE | 5th WE | 1st CE | 2nd CE |
|---|---|---|---|---|---|---|---|---|
| Glass fibers | | 23 | 23 | 23 | 23 | 23 | 23 | 23 |
| Metal line (copper) | | 1 | 1 | 1 | 1 | 1 | 1 | 1 |
| Aqueous phenol | | 12 | 12 | 12 | 12 | 12 | 12 | 12 |
| Compounded rubber | | 64 | 64 | 64 | 64 | 64 | 64 | 64 |
| Break down | Rubber (NBR, SBR) | 29 | 28 | 26 | 24 | 24 | 31 | 30 |
| | Carbon black | 3 | 3 | 3 | 3 | 3 | 4 | 3 |
| | Sulfur | 1.5 | 1.5 | 1.5 | 1.5 | 1.5 | 5 | 1.5 |
| | Accelerator | 2 | 2 | 2 | 2 | 2 | 2 | 2 |
| | Phenol resin | 7 | 10 | 13 | 16 | 17 | 0 | 6 |
| | Resin Dust | 10 | 9 | 9 | 8 | 8 | 11 | 10 |
| | Calcium carbonate | 11.5 | 10.5 | 9.5 | 9.5 | 8.5 | 11 | 11.5 |
| Friction/ abrasion test | Min. µ *1 | 0.310 | 0.312 | 0.311 | 0.310 | 0.310 | 0.311 | 0.301 |
| | Stable µ *2 | 0.335 | 0.338 | 0.340 | 0.341 | 0.341 | 0.339 | 0.330 |
| | Wear depth (mm) | 0.221 | 0.218 | 0.209 | 0.205 | 0.205 | 0.222 | 0.312 |
| Rotating destructive test *3 (rpm) | | 12470 | 12590 | 12680 | 12750 | 12760 | 12590 | 11440 |

| | | | | | | | | |
|---|---|---|---|---|---|---|---|---|
| *1: Minimum friction coefficient after 10 times in 2000 times of engagement *2: Average value of friction coefficients after 200 times in 2000 times of engagement *3: Average value of 10 pieces of test samples | | | | | | | | |

As shown in TABLE 2, the amount of the phenol resin powder is increased step by step by 3 volume percent in the first to the fourth working examples: 7 volume percent in the first working example, 10 volume percent in the second working example, 13 volume percent in the third working example, 16 volume percent in the fourth working example. Then, the amount of the phenol resin powder is set at 17 volume percent in the fifth working example. Since the amount of the whole compounded rubber is fixed at 64 volume percent, the amount of the rubber is decreased gradually from 29 volume percent to 28 volume percent, 26 volume percent, 24 volume percent and 24 volume percent, respectively, in the first to the fifth working examples. Moreover, the amount of the resin dust is decreased gradually from 10 volume percent to 9 volume percent, 9 volume percent, 8 volume percent and 8 volume percent, respectively, in the first to the fifth working examples. Furthermore, the amount of the calcium carbonate is decreased gradually from 11.5 volume percent to 10.5 volume percent, 9.5 volume percent, 9.5 volume percent and 8.5 volume percent, respectively, in the first to the fifth working examples.

In contrast, in the first comparison example, the amount of the sulfur in the compounded rubber is set at 5 volume percent, while no phenol is blended. In the second comparison example, the amount of the sulfur is 1.5 volume percent as the first to the fifth working example. However, the amount of the phenol resin powder is lessened to 6 volume percent in the second comparison example.

Clutch facings were manufactured from a material with these compositions by a common manufacturing method. Then, a friction/abrasion test and a rotating destructive test were performed, respectively, so as to check friction property and strength thereof. As a condition for the friction/abrasion test, a size of a test sample was set at an outside diameter of 236mm, an inside diameter of 150mm and a thickness of 3.5mm. Moreover, an inertia was set at 3.9kgm2, a rotation speed was set at 1500rpm and a temperature (temperature of pressure plate) was set at 300°C. Furthermore, a number of times of engagement were set at 2000 times. Then, the friction/abrasion test was conducted.

As a condition for the rotating destructive test, a test sample was set at a same size or at an outside diameter of 236mm, an inside diameter of 150mm and a thickness of 3.5mm. Moreover, a temperature (atmosphere temperature) was set at 200°C. Furthermore, a rotation speed was raised in incremental steps or increased each time by 200rpm/s from 3000rpm until the test sample was destructed. Then, the rotating destructive test was conducted. Each of the test results is shown in a lower part of TABLE 2.

As shown in TABLE 2, the minimum friction coefficient (minimum µ) falls within a range of 0.310 to 0.312 in the first working example to the fifth working example, respectively, while it is 0.311 in the conventional first comparison example using only the sulfur. Moreover, the stable friction coefficient (stable µ) falls within a range of 0.335 to 0.341 in the first working example to the fifth working example, respectively, while it is 0.339 in the first comparison example. Thus, the minimum µ and the stable µ in each of the working examples according to the present embodiment are equivalent to that of the conventional one. Furthermore, the wear amounts falls within a range of 0.205mm to 0,221mm in the first working example to the fifth working example, respectively, while it is 0.222mm in the first comparison example. Thus, the wear amount in each of the working examples according to the present embodiment is equivalent to that of the conventional one.

In addition, with respect to the rotating destructive test, the average value of ten pieces of the test samples falls within a range of 12470rpm to 12760rpm in the first working example to the fifth working example, respectively, while the average value of ten pieces of the test samples is 12590rpm in the first comparison example. Thus, the destructive property in each of the working examples according to the present embodiment is equivalent to that of the conventional one.

In contrast, in the second comparison example, the minimum µ is 0.301 and the stable µ is 0.330, both of which are a little smaller than those of the first comparison example. The wear amount in the second comparison example is 0.312mm and larger than that of the first comparison example. Moreover, with respect to the rotating destructive test, the average value of ten pieces of the test samples is a small value such as 11440rpm in the second comparison example. Thus, the results show that the second comparison example is inferior to the first comparison example as the conventional product in each of the friction/abrasion test and the rotating destructive test.

Accordingly, it was found out that the amount of the phenol resin powder needed to be not less than 7 volume percent in case the amount of the sulfur is 1.5 volume percent. Moreover, it was also found out that there were no advantages in their property even if the phenol resin powder was blended in an amount exceeding 17 volume percent. That is, it turned out that it was preferable to set the amount or the volume content of the phenol resin powder within a range of 7 to 17 volume percent in case the amount or the volume content of the sulfur was 1.5 volume percent.

As described above, the problem of odor is solved by setting the amount of the sulfur not less than 2.0 volume percent in the clutch facing. Still, if the amount of the sulfur is lessened, the amount of the phenol resin powder needs to be increased accordingly. Since the phenol resin powder is more expensive than the sulfur, it is preferable to make the amount of the sulfur near 2.0 volume percent in view of costs.

As described above, in the clutch facing according to the first working example to the fifth working example of the present embodiment, the sulfur in the compounded rubber as a raw material of the clutch facing is reduced in amount to a range not more than the predetermined value, while the strength of the compounded rubber is maintained by addition of the thermosetting resin. Thus, the clutch facing of the present embodiment can be manufacture by the conventional manufacturing method without any necessity of added steps. Moreover, the clutch facing is able to cut down or restrain the generation of the odor of the sulfur compound gas, while keeping the strength and the friction characteristics as well.

In the present embodiment, the working examples use the phenol resin powder as the thermosetting resin. However, the clutch facing may use other thermosetting resin in the form of powder or other thermosetting resin in the form other than the powder, including the modified phenol resin and the epoxy resin. Particularly, the phenol rein, the modified phenol resin and the epoxy resin are easily obtainable and excellent in the heat resistance. Therefore, they are preferable as the thermosetting resin as the raw material of the clutch facing.

The preferred embodiments described herein are illustrative and not restrictive, the scope of the invention being indicated in the appended claims and all variations which come within the meaning of the claims are intended to be embraced therein.

In a clutch facing, an amount of sulfur is fixed at 1.5 volume percent in order to solve a problem of odor from a sulfur compound gas. An amount of glass fibers is fixed at 23 volume percent, an amount of metal lines is fixed at 1 volume percent, an amount of an aqueous phenol for glass fiber impregnation is fixed at 12 volume percent, respectively. An amount of a whole compounded rubber is fixed at 64 volume percent. The clutch facing is manufactured while changing amounts of ingredients other than the sulfur in the compounded rubber. A friction/abrasion test and a rotating destructive test were carried out. Then, it turned out that the clutch facing has a friction/abrasion property and strength equivalent to those of a conventional clutch facing by setting an amount of a phenol resin powder at 7 volume percent to 17 volume percent.

## Claims

1. Clutch facing containing a compounded rubber, glass fiber and synthetic resin for glass fiber impregnation,
***characterized in that***
the compounded rubber contains sulfur for vulcanizing the compounded rubber and a thermosetting resin for improving frictional property and strength of the compounded rubber, and
the volume content of the sulfur in the compounded rubber is set in a range of 0.5 to 2.0 volume percent to the entire volume of the clutch facing.

2. A clutch facing as recited in claim 1, **characterized in that** the volume content of the sulfur in the compounded rubber is set in a range of 1.5 to 2.0 volume percent to the entire volume of the clutch facing.

3. A clutch facing as recited in claim 1 or 2, **characterized in that**, in case the volume content of the sulfur in the compounded rubber is set at about 1.5 volume percent to the entire volume of the clutch facing, the volume content of the thermosetting resin in the compounded rubber is set in a range of 7 to 17 volume percent to the entire volume of the clutch facing.

4. A clutch facing as recited in claim 1, **characterized in that** the thermosetting resin is one selected from a group consisting of a phenol resin, a modified phenol resin and an epoxy resin.

## Patentansprüche

1. Kupplungsbelag, der einen compoundierten Kautschuk, Glasfaser und synthetisches Harz zur Glasfaserimprägnierung enthält,
**dadurch gekennzeichnet, dass**
der compoundierte Kautschuk Schwefel zum Vulkanisieren des compoundierten Kautschuks und ein wärmehärtbares Harz zum Verbessern der Reibungseigenschaft und Festigkeit des compoundierten Kautschuk enthält, und
der Volumengehalt des Schwefels in dem compoundierten Kautschuk in einem Bereich von 0,5 bis 2,0 Volumenprozent zu dem Gesamtvolumen des Kupplungsbelags eingestellt ist.

2. Kupplungsbelag nach Anspruch 1, **dadurch gekennzeichnet, dass** der Volumengehalt des Schwefels in dem compoundierten Kautschuk in einem Bereich von 1,5 bis 2,0 Volumenprozent zu dem Gesamtvolumen des Kupplungsbelags eingestellt ist.

3. Kupplungsbelag nach Anspruch 1 oder 2, **dadurch gekennzeichnet, dass**, falls der Volumengehalt des Schwefels in dem compoundierten Kautschuk auf etwa 1,5 Volumenprozent zu dem Gesamtvolumen des Kupplungsbelags eingestellt ist, der Volumengehalt des wärmehärtbaren Harzes in dem compoundierten Kautschuk in einem Bereich von 7 bis 17 Volumentprozent zu dem Gesamtvolumen des Kupplungsbelags eingestellt ist.

4. Kupplungsbelag nach Anspruch 1, **dadurch gekennzeichnet, dass** das wärmehärtbare Harz eines ist, das aus der aus einem Phenolharz, einem modifizierten Phenolharz und einem Epoxidharz bestehenden Gruppe ausgewählt ist.

## Revendications

1. Garniture d'embrayage contenant un caoutchouc composé, une fibre de verre, et une résine synthétique pour une imprégnation de fibre de verre,
**caractérisée en ce que**
le caoutchouc composé contient du soufre pour vulcaniser le caoutchouc composé et une résine thermodurcissable pour améliorer la propriété frictionnelle et la résistance du caoutchouc composé, et
la teneur volumique du soufre dans le caoutchouc composé est établie dans une plage de 0.5 à 2.0 pourcent en volume par rapport au volume total de la garniture d'embrayage.

2. Garniture d'embrayage selon la revendication 1, **caractérisée en ce que** la teneur volumique du soufre dans le caoutchouc composé est établie dans une plage de 1.5 à 2.0 pourcent en volume par rapport au volume total de la garniture d'embrayage.

3. Garniture d'embrayage selon la revendication 1 ou 2, **caractérisée en ce que**, dans le cas ou la teneur volumique du soufre dans le caoutchouc composé est établie à environ 1.5 pourcent en volume par rapport au volume total de la garniture d'embrayage, la teneur volumique de la résine thermodurcissable dans le caoutchouc composé est établie dans une plage de 7 à 17 pourcent en volume par rapport au volume total de la garniture d'embrayage.

4. Garniture d'embrayage selon la revendication 1, **caractérisée en ce que** la résine thermodurcissable est une résine sélectionnée d'un groupe constitué d'une résine phénolique, d'une résine phénolique modifiée et d'une résine époxy.
